# EUROPÄISCHE PATENTANMELDUNG

(11) **EP 0 633 207 A1**
(43) Veröffentlichungstag der Anmeldung: **11.01.1995**
(21) Anmeldenummer: 94109844.4
(22) Anmeldetag: 24.06.1994
(51) Int. Cl.: B65G 47/49

(54) **Transportsystem zum Transport von Proben zu unterschiedlichen Behandlungseinrichtungen**

(30) Priorität: 07.07.1993 DE 4322528
(71) Anmelder: SIEMENS AKTIENGESELLSCHAFT, D-80333 München (DE)
(72) Erfinder: Schröder, Helmuth, Dipl.-Ing., D-91346 Wiesenttal (DE)

(57) **Zusammenfassung**

Zum Transport von Proben zu unterschiedlichen Behandlungseinrichtungen (z. B. 5) ist ein umlaufendes Transportband (13) mit darauf umlaufenden Probenträgern (21) an den Behandlungseinrichtungen (z. B. 5) vorbeigeführt. Jeder Probenträger (21) ist mit einem Datenträger (23) versehen, in dem Daten zur Identifizierung der transportierten Probe und der für sie vorgesehenen bzw. erfolgten Behandlungsschritte in den Behandlungseinrichtungen (z. B. 5) gespeichert sind. Jeder Behandlungseinrichtung (z. B. 5) ist eine Schreib-/Lesestation (24) zugeordnet, die die Daten aus den Datenträgern (23) ankommender Probenträger (21) liest und in Abhängigkeit davon ein Handhabungsgerät (29) zum Transport des Probenträgers (21) zu der Bedienungseinrichtung (5) aktiviert. Die Daten werden zwischengespeichert und der nunmehr als leer markierte Probenträger (21) wieder auf das Transportband (13) zurückgesetzt. Nach erfolgter Behandlung der Probe wird ein leerer Probenträger (21) zur Aufnahme der behandelten Probe angehalten und mit den zwischengespeicherten sowie neuen Daten markiert.

## Beschreibung

Zur Behandlung von Proben in unterschiedlichen Behandlungseinrichtungen, wie z. B. Bearbeitungseinrichtungen zur Bearbeitung von Werkstücken oder Aufbereitungs- und Analyseeinrichtungen zur Aufbereitung und automatischen Untersuchung von Laborproben, z. B. Materialproben, ist es erforderlich, die einzelnen Proben nach vorgegebenen Ablaufplänen und gegebenenfalls in Abhängigkeit von Untersuchungs- und Testresultaten den einzelnen Behandlungseinrichtungen zuzuführen. Da die Proben in unterschiedlichen Behandlungseinrichtungen unterschiedlich lange verweilen können und außerdem für unterschiedliche Proben unterschiedliche Behandlungsschritte in unterschiedlicher Reihenfolge vorgesehen werden können, stellt sich die Aufgabe, ein Transportsystem für die Proben anzugeben, das eine automatische Zuführung der Proben zu den einzelnen Behandlungseinrichtungen ermöglicht, wobei viele verschiedene Proben transportiert werden sollen, eine schnellstmögliche Behandlung der Proben bei optimaler Auslastung der Behandlungseinrichtungen erfolgen soll, eine eindeutige Identifizierung und Verfolgung der Proben zur Vermeidung von Verwechslungen der einzelnen Proben gewährleistet sein soll und wobei ferner Erweiterungen und Änderungen des Transportsystems ohne großen Aufwand möglich sein sollen.

Gemäß der Erfindung wird die Aufgabe durch ein Transportsystem zum Transport von Proben zu unterschiedlichen Behandlungseinrichtungen gelöst, mit zumindest einem kontinuierlich umlaufenden Transportband, das an den Behandlungseinrichtungen vorbeigeführt ist, mit auf dem Transportband umlaufenden Probenträgern, mit an den Probenträgern angeordneten beschreib- und auslesbaren Datenträgern, mit den Behandlungseinrichtungen zugeordneten und bei dem Transportband angeordneten Schreib-/Lesestationen zum berührungslosen Beschreiben und Auslesen der Datenträger, mit den Schreib-/Lesestationen einzeln zugeordneten Stoppvorrichtungen zum Anhalten eines auf dem Transportband ankommenden Probenträgers in einer vorgegebenen Halteposition, mit den Behandlungseinrichtungen zugeordneten Handhabungsgeräten zum Transport eines Probenträgers aus der Halteposition heraus zu der jeweiligen Behandlungseinrichtung und von dort wieder auf das Transportband zurück und mit einem Steuersystem zur Ansteuerung der Schreib-/Lesestationen, der Stoppvorrichtungen und der Handhabungsgeräte in der Weise, daß eine Aktivierung einer der Stoppvorrichtungen in Abhängigkeit von aus dem Datenträger eines ankommenden Probenträgers ausgelesenen Daten erfolgt, daß der in der Halteposition angehaltene Probenträger entweder zur Abgabe einer zu behandelnden Probe oder zur Aufnahme einer behandelten Probe mittels des Handhabungsgerätes zu der betreffenden Behandlungseinrichtung transportiert und von dort auf das Transportband zurücktransportiert wird, daß bei Abgabe einer zu behandelnden Probe die aus dem betreffenden Probenträger ausgelesenen Daten in dem Steuersystem zwischengespeichert werden und daß nach einer Aufnahme der behandelten Probe durch einen Probenträger diese Daten zusammen mit neuen Daten in den Datenträger des Probenträgers eingeschrieben werden.

Durch die in dem Datenträger eines jeden Probenträgers enthaltenen Daten wird jede einzelne Probe definiert und die Folge der Behandlungsschritte für diese Probe festgelegt. Kommt ein auf dem Transportband umlaufender Probenträger an einer der Behandlungseinrichtungen vorbei, so werden in dem Fall, daß die Behandlungseinrichtung zur Aufnahme einer neuen Probe bereit ist, durch die zugeordnete Schreib-/Lesestation die Daten aus dem Datenträger ausgelesen und in dem Steuersystem daraufhin überpüft, ob für die betreffende Probe auf dem Probenträger eine Behandlung in der Behandlungseinrichtung vorgesehen ist. Wenn dies der Fall ist, wird die Stoppvorrichtung betätigt und der angehaltene Probenträger mittels des Handhabungsgerätes zu der Behandlungseinrichtung transportiert. Nach Übergabe der Probe an die Behandlungseinrichtung wird der Probenträger wieder auf das Transportband zurückgesetzt und in seinem Datenspeicher als leer markiert. Spätestens dann wird die Stoppvorrichtung deaktiviert, so daß die übrigen auf dem Transportband umlaufenden Probenträger an der Behandlungseinrichtung vorbeifahren können. Sobald nach Abschluß der Behandlung der Probe ein Probenträger an der Behandlungseinrichtung vorbeikommt, der durch Lesen der Daten aus seinem Datenspeicher als leer identifiziert wird, wird die Stoppvorrichtung betätigt und der Probenträger zur Aufnahme der behandelten Probe der Behandlungseinrichtung zugeführt. Hierdurch wird eine bessere Ausnutzung der Probenträger erreicht, weil diese während der Behandlung der einzelnen Proben in den Behandlungseinrichtungen weiterhin in dem Transportsystem zirkulieren und zur Aufnahme neuer Proben zur Verfügung stehen.

Da zu jedem Zeitpunkt jede in dem Transportsystem umlaufende Probe zusammen mit den für die Probe vorgesehenen Behandlungschritten und den bereits erfolgten Behandlungsschritten durch die Daten in dem Datenträger des die betreffende Probe jeweils aufnehmenden Probenträgers definiert ist, ist eine genaue Identifizierung und Verfolgung aller in dem erfindungsgemäßen Transportsystem umlaufenden Proben möglich. Da die Zuführung der einzelnen Proben zu den unterschiedlichen Behandlungseinrichtungen nur von den Daten in dem Datenträger des Probenträgers abhängig ist, ist der Betriebsablauf von der Zahl und Anordnung der Behandlungseinrichtungen an dem Transportband und von der Führung des Transportbandes unabhängig, so daß auch Erweiterungen und Änderungen des Transportsystems ohne weiteres möglich sind.

Eine schnellstmögliche Behandlung aller Proben bei optimaler Ausnutzung der einzelnen Behandlungseinrichtungen ist dadurch gewährleistet, daß jede an einer Behandlungseinrichtung vorbeitransportierte Probe automatisch der Behandlungseinrichtung zugeführt wird, wenn aufgrund der Daten in dem Datenträger eine Behandlung der Probe vorgesehen ist und außerdem die Behandlungseinrichtung zur Aufnahme der Probe bereit ist.

Ein weiterer Vorteil besteht darin, daß Proben jederzeit entweder automatisch oder manuell in das Transportsystem eingeschleust werden können, indem der Datenträger eines Probenträgers mit den entsprechenden Daten der Probe beschrieben wird und dann zusammen mit der Probe an einer beliebigen Stelle auf das Transportband aufgesetzt wird. Außerdem können Probenträger mit den zugehörigen Proben jederzeit von dem Transportband genommen und über eine separate Lesestation identifiziert werden. In diesem Zusammenhang wird ein automatisches Einschleusen von Proben in das Transportsystem in vorteilhafter Weise dadurch ermöglicht, daß neben dem Transportband mindestens eine Einrichtung zum Beschicken eines leeren Probenträgers auf dem Förderband mit der Probe angeordnet ist und daß der Einrichtung eine von dem Steuersystem gesteuerte weitere Schreib-/Lesestation und Stoppvorrichtung zugeordnet ist. Wenn in der Einrichtung eine Probe zum Einschleusen in das Transportsystem vorliegt und ein Probenträger an der Einrichtung vorbeikommt, der durch die weitere Schreib-/Lesestation als leer identifiziert wird, wird der betreffende Probenträger durch die Stoppvorrichtung angehalten, mit der Probe beladen und in dem Datenträger mit den der Probe zugeordneten Daten markiert.

Eine in bezug auf Änderungen und Erweiterungen besonders flexible Struktur des erfindungsgemäßen Transportsystems wird in vorteilhafter Weise dadurch erreicht, daß das Steuersystem unabhängig arbeitende, den Behandlungseinrichtungen mit den zugehörigen Schreib-/Lesestationen und Handhabungsgeraten einzeln zugeordnete Steuereinrichtungen aufweist. Dabei wird der Umstand ausgenutzt, daß die Daten zur Identifizierung der einzelnen Proben und der für sie vorgesehenen bzw. bereits erfolgten Behandlungsschritte in den Datenträgern der Probenträger enthalten sind, so daß die einzelnen Behandlungseinrichtungen mit den ihnen zugeordneten Schreib-/Lesestationen, Stoppvorrichtungen und Handhabungsgeräten allein aufgrund dieser Daten gesteuert werden können und somit auf eine zentrale Steuerung aller Behandlungseinrichtungen verzichtet werden kann.

Wenn die einzelnen Proben nach Durchlaufen sämtlicher für sie vorgesehener Behandlungsschritte nicht mehr benötigt werden, können sie nach Durchführung des jeweils letzten Behandlungsschrittes in der betreffenden Behandlungseinrichtung verworfen werden. Um darüber hinaus auch einzelne Proben nach einem vorgegebenen Ordnungssystem sammeln zu können und dabei jederzeit eine Identifizierung der gesammelten Proben zu ermöglichen, ist in vorteilhafter Weise vorgesehen, daß mindestens eine der Behandlungseinrichtungen als Probenmagazin mit mehreren Behältern zur Aufnahme unterschiedlicher Proben ausgebildet ist, daß an jedem Behälter jeweils ein weiterer beschreib- und auslesbarer Datenträger angebracht ist und daß den einzelnen Behältern in dem Probenmagazin Schreibstationen zugeordnet sind, die mit dem Steuersystem verbunden sind und ein Beschreiben der weiteren Datenträger an den Behältern mit den Daten aus den Datenträgern von zu dem Probenmagazin transportierten Probenträgern ermöglichen. Für eine weitere Behandlung oder Auswertung der gesammelten Proben können die Behälter dem Probenmagazin entnommen werden, wobei eine Identifizierung der in jedem Behälter gesammelten Proben durch Auslesen der Daten aus den weiteren Datenträgern an den Behältern mittels beliebiger externen Lesestationen möglich ist.

Um sicherzustellen, daß es beim Rücktransport eines Probenträgers von einer der Behandlungseinrichtungen zum Transportband nicht zu einer Kollision mit den auf dem Transportband umlaufenden Probenträgern kommt, ist bei dem erfindungsgemäßen Transportsystem vorzugsweise in Umlaufrichtung des Transportbandes gesehen vor jeder Halteposition jeweils eine weitere Stoppvorrichtung angeordnet, die durch das Steuersystem zum Freihalten der Halteposition für den von der zugeordneten Behandlungseinrichtung auf das Transportband zurücktransportierten Probenträger ansteuerbar ist. Ferner sind in vorteilhafter Weise im Bereich der Haltepositionen Näherungssensoren angeordnet, die dem Steuersystem eine Belegung der Haltepositionen durch Probenträger melden. Wie eingangs bereits erwähnt, kann es sich bei den von dem erfindungsgemäßen Transportsystem zu bedienenden Behandlungseinrichtungen um Bearbeitungseinrichtungen für Werkstücke oder um Aufbereitungs- und Analyseeinrichtungen zur Aufbereitung und automatischen Untersuchung von Laborproben handeln. Dabei ist das erfindungsgemäße Transportsystem vorzugsweise zum Transport von Proben von Ausgangs-, Zwischen- und Endprodukten der Zementproduktion ausgebildet, wobei die Behandlungseinrichtungen zumindest einige der folgenden Einrichtungen umfassen: Mühle, Feinheitsmeßgerät, Presse, Farbmeßeinrichtung, Spektrometer, Diffraktometer und Probenmagazin. Um in Form eines Mehles vorliegende Proben in dem Spektrometer und dem Diffraktometer analysieren zu können, werden die Proben in der Presse zu vorgegebenen Formen, z. B. Tabletten, gepreßt.

In diesem Zusammenhang ist das erfindungsgemäße Transportsystem vorzugsweise in der Weise ausgebildet, daß zwei unterschiedliche Transportbänder an der Presse vorbeigeführt sind, von denen das eine Transportband Probenträger zur Aufnahme von gemahlenen Proben transportiert und das andere Transportband Probenträger zur Aufnahme von in der Presse zu vorgegebenen Formen gepreßten Proben an dem Spektrometer und/oder Diffraktometer vorbeiführt, und daß im Bereich zwischen der Presse und den beiden Transportbändern Handhabungsgeräte zum Überführen von Probenträgern mit zum Pressen vorgesehenen Proben von dem einen Transportband in die Presse und zum Überführen von gepreßten Proben auf den dafür vorgesehenen Probenträgern aus der Presse heraus auf das andere Transportband angeordnet sind.

Zur Erläuterung der Erfindung wird im folgenden auf die Figuren der Zeichnung Bezug genommen. Im einzelnen zeigen:
- FIG 1: in schematischer Darstellung eine Ausführungsform für das erfindungsgemäße Transportsystem mit mehreren Behandlungseinrichtungen,
- FIG 2: ein Detail des in FIG 1 gezeigten Transportsystems im Bereich einer der Behandlungseinrichtungen,
- FIG 3: ein Ausführungsbeispiel für einen Probenträger mit einem Becher,
- FIG 4: ein Ausführungsbeispiel für ein Probenmagazin zum Sammeln von Proben und
- FIG 5: ein Ausführungsbeispiel für einen Probenträger zur Aufnahme von zu Tabletten gepreßten Proben.

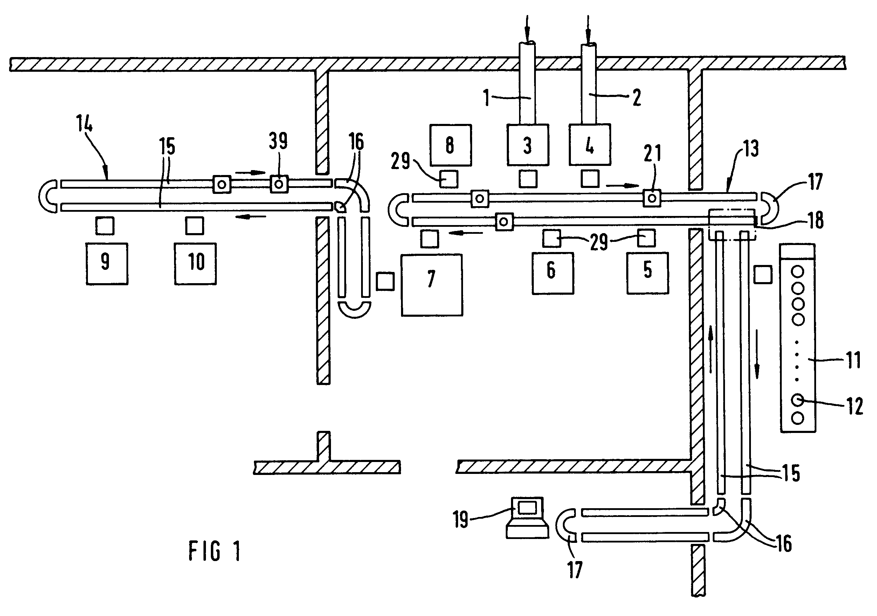

FIG 1 zeigt ein Labor zur Untersuchung von Ausgangs-, Zwischen- und Endprodukten einer Zementproduktion. Dabei werden aus der laufenden Zementproduktion über einen ersten Rohrpoststrang 1 Rohmehlproben und über einen zweiten Rohrpoststrang 2 Zement- und Klinkerproben in das Labor gefördert. Die Rohrpoststränge 1 und 2 münden in Einrichtungen 3 und 4 zur Dosierung und Übergabe der Proben an ein Transportsystem, das die einzelnen Proben zu unterschiedlichen Behandlungseinrichtungen zur automatischen Aufbereitung und Analyse der Proben transportiert. Bei den Behandlungseinrichtungen handelt es sich im einzelnen um ein Feinheitsmeßgerät 5 zur Messung der Feinheit des gemahlenen Probenmaterials, eine Mühle 6 zum Feinmahlen von Proben, eine Presse 7 zum Pressen von gemahlenem Probenmaterial zu Tabletten, eine Einrichtung 8 zum Reinigen von die gemahlenen Proben aufnehmenden Bechern, ein Spektrometer 9 und ein Diffraktometer 10 zur Analyse der zu Tabletten gepreßten Proben und um ein Probenmagazin 11 zum Sammeln ausgewählter Proben in einzelnen Behältern 12, um auf diese Weise Querschnittsproben bilden zu können. Die Einrichtungen 3 und 4 zur Übergabe der Proben an das Transportsystem und die Behandlungseinrichtungen 5 bis 11 sind in verschiedenen Räumen des Labors untergebracht und bezüglich des Transports der Proben von und zu den Einrichtungen 3 bis 11 über seitlich an den Einrichtungen 3 bis 11 vorbeigeführte Transportbänder 13 und 14 miteinander verbunden. Die Transportbänder 13 und 14 sind aus geradlinigen Bandsegmenten 15 in Form von Doppelgurtförderern zusammengesetzt, die an ihren Enden über Umlenksegmente 16 mit einem Umlenkwinkel von 90° und weitere Umlenksegmente 17 mit einem Umlenkwinkel von 180° derart miteinander verbunden sind, daß beide Transportbänder 13 und 14 jeweils einen kontinuierlichen Umlauf der Proben an den Einrichtungen 3 bis 11 vorbei ermöglichen; dabei ist bei dem Transportband 13 zusätzlich noch eine Bandübergabestation 18 vorgesehen, die es ermöglicht, eine Probe von einem Bandsegment 15 auf ein davon abzweigendes Bandsegment zu überführen. Die Transportbänder 13 und 14 sind derart durch die Räume des Labors verlegt, daß das Transportband 13 die Einrichtungen 3 bis 8 und 11 untereinander verbindet und daß das Transportband 14 an den Einrichtungen 7, 9 und 10 vorbeiführt. Schließlich ist im Bereich des Transportbandes 13 eine Station 19 zur manuellen Einschleusung von Proben in das Transportsystem angeordnet.

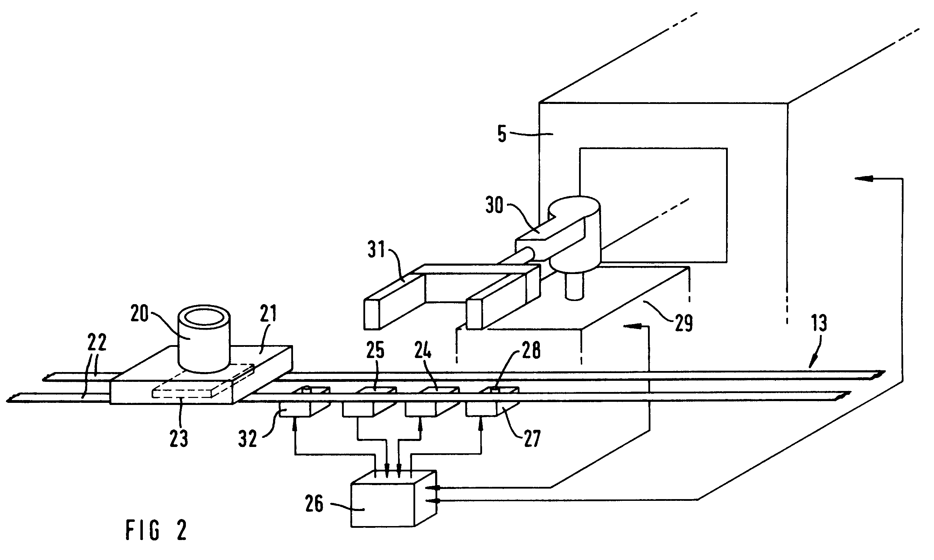

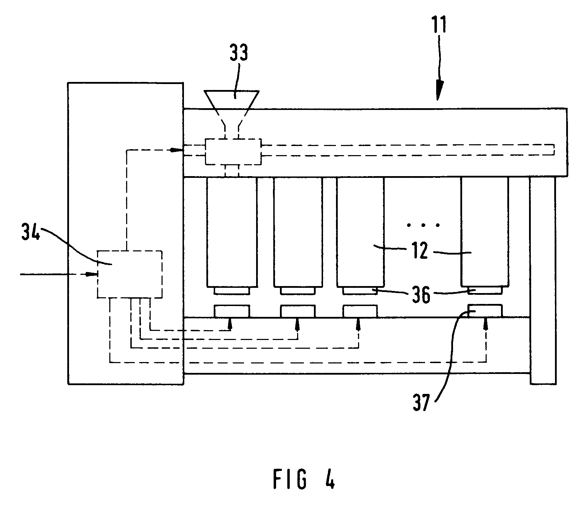

Wie FIG 2 am Beispiel des an der Behandlungseinrichtung 5 vorbeigeführten Abschnittes des Transportbandes 13 zeigt, sind die auf dem Transportband 13 umlaufenden Proben jeweils in einem Becher 20 enthalten, der auf einem Probenträger 21 angeordnet ist. Der Probenträger 21 ist ebenso wie jeder andere Probenträger auf den beiden Fördergurten 22 des Förderbandes 3 aufgesetzt und wird von diesem an den einzelnen Einrichtungen, z. B. dem Feinheitsmeßgerät 5, vorbeitransportiert. Der Probenträger 21 ist mit einem Datenträger 23 versehen, der Daten enthält, die die jeweilige Probe identifizieren und die für die betreffende Probe durchzuführenden oder bereits durchgeführten Behandlungsschritte in den einzelnen Behandlungseinrichtungen 5 bis 11 bezeichnen. Diese Daten können mittels einer Schreib-/Lesestation berührungslos, z. B. induktiv, in den Datenträger 23 eingeschrieben und aus diesem ausgelesen werden. Der Datenträger 23 besteht dazu aus einem Scheib-/Lesespeicher (RAM) mit Stützbatterie, wobei die Energie zum Lesen und Schreiben der Daten von der jeweiligen Schreib-/Lesestation bereitgestellt wird und der von dem Datenträger 23 benötigte Energieanteil ebenfalls induktiv übertragen wird.

Wie FIG 2 am Beispiel des Feinheitsmeßgerätes 5 zeigt, ist jeder Einrichtung 3 bis 11 eine solche Schreib-/Lesestation 24 zugeordnet und dort im Bereich des Förderbandes 13 bzw. 14 angeordnet. Im Bereich des Förderbandes 13 bzw. 14 ist ferner ein Näherungsdetektor 25 angeordnet, der eine Annäherung des Probenträgers 21 an die Schreib-/Lesestation 24 detektiert und dies einer Steuereinrichtung 26 mitteilt. Wenn der Steuereinrichtung 26 außerdem von der zugeordneten Behandlungseinrichtung 5 mitgeteilt wird, daß diese für eine Probenbehandlung frei ist, aktiviert die Steuereinrichtung 26 die Schreib-/Lesestation 24 zum Auslesen der Daten oder eines charakteristischen Teils der Daten aus dem Datenträger 23 des Probenträgers 21. In der Steuereinrichtung 26 werden die ausgelesenen Daten daraufhin überprüft, ob für die in dem Becher 20 auf dem Probenträger 21 enthaltene Probe eine Behandlung in der betreffenden Behandlungseinrichtung, also beispielsweise eine Untersuchung in dem Feinheitsmeßgerät 5, vorgesehen ist. Ist dies der Fall, so wird von der Steuereinrichtung 26 eine im Bereich des Transportbandes 13 angeordnete Stoppvorrichtung 27 betätigt, die beispielsweise durch Ausfahren eines Stößels 28 den Probenträger 21 in einer Halteposition anhält. Wahrend der Probenträger 21 angehalten wird, bewegt sich das Transportband 13 unter diesem weiter. Von der Steuereinrichtung 26 wird daraufhin ein Handhabungsgerät 29 mit einem Schwenkarm 30 und einem Greifer 31 in der Weise angesteuert, daß der Probenträger 21 mit der Probe von dem Transportband 13 abgehoben und zu der Behandlungseinrichtung 5 transportiert wird. Sobald der Probenträger 21 von dem Transportband 13 abgehoben ist, wird dies von dem Näherungssensor 25 detektiert, woraufhin die Stoppvorrichtung 27 von der Steuereinrichtung 26 im Sinne einer Freigabe des Transportes der übrigen auf dem Transportband 13 umlaufenden Probenträger 21 angesteuert wird. Um zu verhindern, daß beim Anhalten des Probenträgers 21 durch die Stoppvorrichtung 27 weitere auf dem Transportband 13 ankommende Probenträger auf den Probenträger 21 auffahren und damit möglicherweise ein sicheres Greifen des Probenträgers 21 durch das Handhabungsgerät 29 verhindern, ist in Umlaufrichtung des Transportbandes 13 gesehen in einem ausreichenden Abstand vor der Stoppvorrichtung 27 eine weitere Stoppvorrichtung 32 angeordnet, die durch die Steuereinrichtung 26 gleichzeitig mit der Stoppvorrichtung 27 betätigt wird.

Der von dem Handhabungsgerät 29 zu der Behandlungseinrichtung 5 transportierte Probenträger 21 kann während des Behandlungsvorganges in der Behandlungseinrichtung 5 verbleiben, wobei nach Abschluß des Behandlungsvorganges der Probenträger 21 zusammen mit der behandelten Probe durch das Handhabungsgerät 29 von der Einrichtung 5 auf das Transportband 13 zurückgefördert wird. Dabei wird vor dem Absetzen des Probenträgers 21 auf das Transportband 13 zunächst durch den Näherungssensor 25 überprüft, ob das Transportband 13 an der betreffenden Stelle zur Aufnahme des Probenträgers 21 frei ist. Gleichzeitig wird die weitere Stoppvorrichtung 32 betätigt, um zu verhindern, daß auf dem Transportband 13 umlaufende Probenträger in den Bereich gelangen, in dem der Probenträger 21 gesetzt werden soll. Sobald der Probenträger 21 auf dem Transportband 13 abgesetzt ist, werden mittels der Schreib-/Lesestation 24 neue Daten in den Datenträger 23 eingeschrieben, die die Durchführung des soeben erfolgten Behandlungsvorganges markieren.

Alternativ zu dem vorstehend angegebenen Beispiel kann vorgesehen werden, daß nach dem Transport des Probenträgers 21 mit der zu behandelnden Probe von dem Transportband 13 in die Behandlungseinrichtung 5 die Probe zur Behandlung in der Einrichtung 5 verbleibt, während der leere Probenträger 21 durch das Handhabungsgerät 29 auf das Transportband 13 zurücktransportiert wird. In diesem Fall werden die beim Anhalten des Probenträgers 21 auf dem Transportband 13 aus dem Datenträger 23 ausgelesenen Daten, welche die Probe und die für die Probe vorgesehenen bzw. bereits durchgeführten Behandlungsschritte kennzeichnen, in der Steuereinrichtung 26 zwischengespeichert. Wenn der leere Probenträger 21 auf das Transportband 13 zurückgesetzt wird, wird durch die Schreib-/Lesestation 24 in dem Datenträger 23 markiert, daß der Probenträger 21 leer ist. Nach Beendigung des Behandlungsvorganges für die in der Behandlungseinrichtung 5 verbliebene Probe wird jeder an der Einrichtung 5 vorbeikommende Probenträger über die Schreib-/Lesestation 24 daraufhin abgefragt, ob er leer ist. Wenn dies der Fall ist, wird der entsprechende Probenträger durch die Stoppvorrichtung 24 angehalten, mit Hilfe des Handhabungsgerätes 29 von dem Transportband 13 zu der Behandlungseinrichtung 5 transportiert, dort mit der behandelten Probe beladen und mittels des Handhabungsgerätes 29 wieder auf das Transportband 13 zurücktransportiert. Nach dem Aufsetzen des Probenträgers 21 mit der behandelten Probe auf das Transportband 13 werden mittels der Schreib-/Lesestation 24 die in der Steuereinrichtung 26 zwischengespeicherten Daten zusammen mit neuen Daten, die die erfolgte Behandlung der Probe markieren, in dem Datenträger 23 des Probenträgers 21 eingeschrieben.

Die in FIG 2 am Beispiel des Feinheitsmeßgerätes 5 erläuterte Überführung von Probenträgern 21 von dem Transportband 13 zu dem Feinheitsmeßgerät 5 gilt auch für die anderen in FIG 1 gezeigten Einrichtungen 3 bis 11. Wird z. B. eine Probe über eine der beiden Rohrpoststränge 1 und 2 an eine der beiden Einrichtungen 3 und 4 zur Einschleusung der Probe in das Transportsystem übersandt, so werden gleichzeitig Daten in die jeweils zugehörige Steuereinrichtung (vgl. Steuereinrichtung 26 in FIG 2) übersandt, die die Probe und die für die Probe durchzuführenden Behandlungsschritte kennzeichnen. Von der der Einrichtung 3 bzw. 4 zugeordneten Schreib-/Lesestation wird unter den an der Einrichtung 3 bzw. 4 vorbeifahrenden Probenträgern ein leerer Probenträger ausgesucht und zur Aufnahme der Probe angehalten. Nachdem das Probenmaterial in den Becher des Probenträgers gefüllt wurde, werden die Daten aus der Steuereinrichtung in den Datenträger des Probenträgers übertragen und anschließend die zugehörige Stoppvorrichtung freigegeben, so daß der Probenträger auf dem Transportband 13 umläuft.

Die Station 19 zur manuellen Einschleusung von Proben in das Transportsystem ist ebenfalls mit einer Schreib-/Lesestation ausgerüstet. Über die Station 19 und die zugehörige Schreib-/Lesestation werden Daten zur Identifizierung der einzuschleusenden Probe in den Datenträger des die Probe aufnehmenden Probenträgers eingelesen und anschließend der Probenträger an beliebiger Stelle auf das Transportband 13 aufgesetzt. Der Probenträger läuft daraufhin in dem Transportsystem um, wobei in Abhängigkeit von den in dem Datenträger gespeicherten Daten eine Behandlung der Probe in den einzelnen Behandlungseinrichtungen 5 bis 11 erfolgt, so wie dies obenstehend anhand von FIG 2 erläutert wurde. Darüber hinaus können jederzeit einzelne Probenträger von dem Transportband 13 abgenommen werden und gesondert untersucht werden, wobei eine Identifizierung der betreffenden Probe durch die in dem Datenträger des Probenträgers enthaltenen Daten möglich ist.

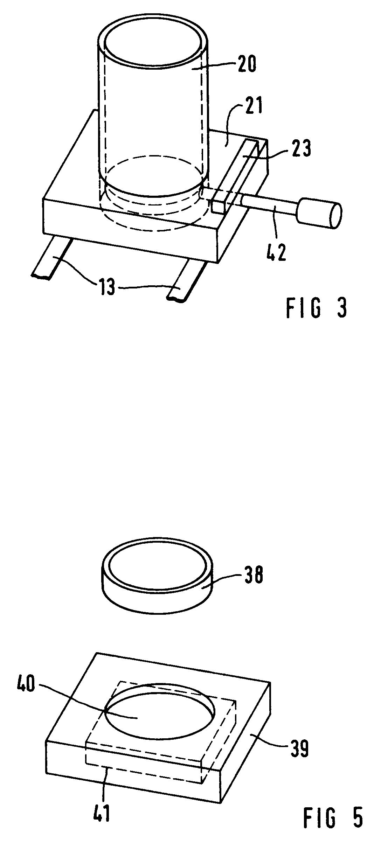

Bei dem in FIG 2 gezeigten Ausführungsbeispiel ist der Datenträger 23 an der Unterseite des Probenträgers 21 angeordnet; die Schreib-/Lesestation 24, der Näherungsdetektor 25 und die Stoppvorrichtungen 27 und 32 sind unter dem Transportband 13 angeordnet. Bei dem alternativen Ausführungsbeispiel nach FIG 3 ist der Datenträger 23 seitlich an dem Probenträger 21 gehalten, wobei die hier nicht gezeigten Einrichtungen 24, 25, 27 und 32 ebenfalls seitlich neben dem Transportband 13 angeordnet sind. Der Probenträger 21 und der Becher 20 sind nach unten hin durch einen Schieber 42 zu öffnen, so daß dadurch der Becherinhalt beispielsweise über einen Einfülltrichter in eine Behandlungseinrichtung, z. B. ein Feinheitsmeßgerät überführt werden kann.

FIG 4 zeigt in schematischer Darstellung das Probenmagazin 11 mit den Behältern 12, in denen ausgewählte Proben gesammelt werden können. Dabei wird, wie dies anhand von FIG 2 bereits erläutert worden ist, die Probe zunächst durch Lesen der Daten aus dem Datenträger 23 des Probenträgers 21 in der Steuereinrichtung 26 identifiziert. Das Handhabungsgerät 29 transportiert daraufhin den Probenträger 21 zu dem Probenmagazin 11 und kippt dort die Probe in einen Trichter 33, der über den Behältern 12 verfahrbar angeordnet ist. Die in der Steuereinrichtung 26 enthaltenen Daten aus dem Datenträger 23 werden einer Steuereinheit 34 des Probenmagazins 11 zugeführt, die eine Antriebseinheit 35 zum Verfahren des Trichters 33 zu einem aufgrund der Daten identifizierten Behälter 12 ansteuert. Dort wird durch automatisches Öffnen der unteren Trichteröffnung der Inhalt des Trichters 33 in den betreffenden Behälter 12 gefüllt. An den Unterseiten der einzelnen Behälter 12 sind Datenträger 36 angeordnet, die über unter den Behältern 12 angeordnete Schreibstationen 37 einzeln mit Daten beschreibbar sind. Sobald eine Probe in einem der Behälter 12 verkippt wird, werden die zu der Probe gehörenden Daten von der Steuereinheit 34 an die unter dem jeweiligen Behälter 12 angeordnete Schreibstation 37 und von dort in den Datenträger 36 an dem Behälter 12 übertragen.

Für den Fall, daß der Probenträger 21 so wie in FIG 3 ausgebildet ist, ist über jedem Behälter 12 jeweils ein Trichter, entsprechend dem Trichter 33, fest angeordnet. Der Probenträger 21 mit dem Becher 20 wird mittels des Transportbandes 13 über diese Trichter hinweg transportiert, wobei der Probenträger 21 über einem ausgewählten Trichter angehalten wird und der Becherinhalt durch Öffnen des Schiebers 42 in den betreffenden Trichter und den darunter befindlichen Behälter 12 entleert wird.

Die in FIG 1 gezeigte Presse dient dazu, die gemahlenen Proben, die aufgrund der Daten in dem Datenträger 23 des jeweiligen Probenträgers 21 dem Spektrometer 9 und/oder dem Diffraktometer 10 zugeführt werden sollen, in eine zur Analyse geeignete Tablettenform zu pressen. Hierzu wird der Probenträger 21 mit der gemahlenen Probe von dem Transportband 13 in die Presse 7 überführt und dort entleert. Die in dem Datenträger 23 des Probenträgers 21 enthaltenen Daten werden in die der Presse 7 zugehörige Steuereinrichtung 26 übertragen. Der leere Probenträger 21 wird anschließend auf das Transportband 13 zurückgestellt und von diesem zu der Einrichtung 8 transportiert, wo eine Reinigung des Bechers 20 erfolgt. Die der Presse 7 zugeführte Probe wird in einen Metallring 38 gepreßt, wie dieser in FIG 5 dargestellt ist. Anschließend wird von dem mit 14 bezeichneten Transportband ein leerer Probenträger 39 in die Presse 7 überführt, der sich von dem in FIG 2 gezeigten Probenträger 21 lediglich dadurch unterscheidet, daß er anstelle des Bechers 20 eine Aufnahmeöffnung 40 für den Metallring 38 mit der in Tablettenform gepreßten Probe aufweist. Der Probenträger 39 wird mit der gepreßten Probe auf das Transportband 14 zurückgestellt, wobei die in der Steuereinrichtung 26 der Presse 7 gespeicherten Daten in dem Datenträger 41 des Probenträgers 39 abgespeichert werden. Wenn der Probenträger 39 an dem Spektrometer 9 bzw. Diffraktometer 10 vorbeikommt, wird der Metallring 38 mit der Probe zur Analyse in die betreffende Einrichtung 9 bzw. 10 überführt. Gleichzeitig werden die Daten aus dem Datenträger 41 ausgelesen, so daß nach erfolgter Analyse das Analyseergebnis den Probedaten zugeordnet werden kann. Der Metallring 38 mit der Probe wird in einen leeren Probenträger 39 auf dem Transportband 14 zurücktransportiert und der erfolgte Analyseschritt in dem Datenträger 41 eingetragen. Wenn an der Presse 7 ein Probenträger 39 vorbeikommt, werden die in seinem Datenträger 41 enthaltenen Daten daraufhin überprüft, ob sämtliche Analyseschritte erfolgt sind. Ist dies der Fall, so wird der Probenträger 39 in die Presse 7 überführt und dort der Metallring 38 entleert und gesäubert. Der leere Probenträger 39 wird auf das Transportband 14 zurückgesetzt und in seinem Datenträger 41 als leer markiert.

Wie das anhand der FIG 1 bis 5 erläuterte Ausführungsbeispiel des erfindungsgemäßen Transportsystems zeigt, ermöglicht das erfindungsgemäße Transportsystem eine automatische Zuführung unterschiedlicher Proben zu den einzelnen Behandlungseinrichtungen, wobei eine schnellstmögliche Behandlung der Proben bei optimaler Ausnutzung der Behandlungseinrichtung erfolgt und eine eindeutige Identifizierung und Verfolgung der Proben zur Vermeidung von Verwechslungen einzelner Proben gewährleistet ist. Außerdem können jederzeit Sonderproben manuell in das Transportsystem eingeschleust werden oder Proben dem Transportsystem entnommen werden.

## Patentansprüche

1. Transportsystem zum Transport von Proben zu unterschiedlichen Behandlungseinrichtungen (3 bis 11)
mit zumindest einem kontinuierlich umlaufenden Transportband (13, 14), das an den Behandlungseinrichtungen (3 bis 11) vorbeigeführt ist,
mit auf dem Transportband (13, 14) umlaufenden Probenträgern (21, 39),
mit an den Probenträgern (21, 39) angeordneten beschreib- und auslesbaren Datenträgern (23, 41),
mit den Behandlungseinrichtungen (3 bis 11) zugeordneten und bei dem Transportband (13, 14) angeordneten Schreib-/Lesestationen (24) zum berührungslosen Beschreiben und Auslesen der Datenträger (23, 41),
mit den Schreib-/Lesestationen (24) einzeln zugeordneten Stoppvorrichtungen (27) zum Anhalten eines auf dem Transportband (13, 14) ankommenden Probenträgers (21, 39) in einer vorgegebenen Halteposition,
mit den Behandlungseinrichtungen (3 bis 11) zugeordneten Handhabungsgeräten (29) zum Transport eines Probenträgers (21, 39) aus der Halteposition heraus zu der jeweiligen Behandlungseinrichtung (3 bis 11) und von dort wieder auf das Transportband (13, 14) zurück und
mit einem Steuersystem zur Ansteuerung der Schreib-/Lesestationen (24), der Stoppvorrichtungen (27) und der Handhabungsgeräte (29) in der Weise, daß eine Aktivierung einer der Stoppvorrichtungen (27) in Abhängigkeit von aus dem Datenträger (23, 41) eines ankommenden Probenträgers (21, 39) ausgelesenen Daten erfolgt, daß der in der Halteposition angehaltene Probenträger (21, 39) entweder zur Abgabe einer zu behandelnden Probe oder zur Aufnahme einer behandelten Probe mittels des Handhabungsgerätes (29) zu der betreffenden Behandlungseinrichtung (3 bis 11) transportiert und von dort auf das Transportband (13, 14) zurücktransportiert wird, daß bei Abgabe der zu behandelnden Probe die aus dem Datenträger (23, 41) des betreffenden Probenträgers (21, 39) ausgelesenen Daten in dem Steuersystem zwischengespeichert werden und daß nach einer Aufnahme der behandelten Probe durch einen Probenträger (21, 39) diese Daten zusammen mit neuen Daten in den Datenträger (23, 41) des Probenträgers (21, 39) eingeschrieben werden.

2. Transportsystem nach Anspruch 1,
**dadurch gekennzeichnet**,
daß zum automatischen Einschleusen von Proben in das Transportsystem neben dem Transportband (13) mindestens eine Einrichtung (3, 4) zum Beschicken eines leeren Probenträgers (21) auf dem Transportband (13) mit der Probe angeordnet ist und daß der Einrichtung (3, 4) eine von dem Steuersystem gesteuerte weitere Schreib-/Lesestation und Stoppvorrichtung zugeordnet ist.

3. Transportsystem nach einem der vorangehenden Ansprüche,
**dadurch gekennzeichnet**,
daß das Steuersystem unabhängig arbeitende, den Behandlungseinrichtungen (3 bis 11) mit den zugehörigen Schreib-/Lesestationen (24) und Handhabungsgeräten (29) einzeln zugeordnete Steuereinrichtungen (26) aufweist.

4. Transportsystem nach einem der vorangehenden Ansprüche,
**dadurch gekennzeichnet**,
daß mindestens eine der Behandlungseinrichtungen (3 bis 11) als Probenmagazin (11) mit mehreren Behältern (12) zur Aufnahme unterschiedlicher Proben ausgebildet ist, daß an jedem Behälter (12) jeweils ein weiterer beschreib- und auslesbarer Datenträger (36) angebracht ist und daß den einzelnen Behältern (12) in dem Probenmagazin (11) Schreibstationen (37) zugeordnet sind, die mit dem Steuersystem verbunden sind und ein Beschreiben der weiteren Datenträger (36) an den Behältern (12) mit den Daten aus den Datenträgern (23) von zu dem Probenmagazin (11) transportierten Probenträgern (21) ermöglichen.

5. Transportsystem nach einem der vorangehenden Ansprüche,
**dadurch gekennzeichnet**,
daß in Umlaufrichtung des Transportbandes (13, 14) gesehen vor jeder Halteposition jeweils eine weitere Stoppvorrichtung (32) angeordnet ist, die durch das Steuersystem zum Freihalten der Halteposition für einen von der zugeordneten Behandlungseinrichtung (3 bis 11) auf das Transportband (13, 14) zurücktransportierten Probenträger (21, 39) ansteuerbar ist.

6. Transportsystem nach einem der vorangehenden Ansprüche,
**dadurch gekennzeichnet**,
daß im Bereich der Haltepositionen Näherungssensoren (25) angeordnet sind, die dem Steuersystem eine Belegung der Haltepositionen durch Probenträger (21, 39) melden.

7. Transportsystem nach einem der vorangehenden Ansprüche,
**dadurch gekennzeichnet**,
daß es zum Transport von Proben von Ausgangs-, Zwischen- und Endprodukten der Zementproduktion ausgebildet ist, wobei die Behandlungseinrichtungen (3 bis 11) zumindest einige der folgenden Einrichtungen umfassen: Mühle, Feinheitsmeßgerät, Presse, Farbmeßeinrichtung, Spektrometer, Diffraktometer und Probenmagazin.

8. Transportsystem nach Anspruch 8,
**dadurch gekennzeichnet**,
daß zwei unterschiedliche Transportbänder (13, 14) an der Presse (7) vorbeigeführt sind, von denen das eine Transportband (13) Probenträger (21) zur Aufnahme von gemahlenen Proben transportiert und das andere Transportband (14) Probenträger (39) zur Aufnahme von in der Presse (7) zu vorgegebenen Formen gepreßten Proben an dem Spektrometer (9) und/oder Diffraktometer (10) vorbeiführt, und daß im Bereich zwischen der Presse (7) und den beiden Transportbändern (13, 14) Handhabungsgeräte (29) zum Überführen von Probenträgern (21) mit zum Pressen vorgesehenen Proben von dem einen Transportband (13) in die Presse (7) sowie zum Überführen von gepreßten Proben auf den dafür vorgesehenen Probenträgern (39) aus der Presse (7) heraus auf das andere Transportband (14) angeordnet sind.
